# FASCICULE DE BREVET EUROPEEN

(11) **EP 3 391 363 B1**
(45) Date de publication et mention de la délivrance du brevet: **12.05.2021**
(21) Numéro de dépôt: 16810397.6
(22) Date de dépôt: 15.12.2016
(51) Int. Cl.: G09G 5/14, G06F 3/14

(54) **SYSTÈME ET PROCÉDÉ DE GESTION DE L'AFFICHAGE DE DONNÉES POUR LE PILOTAGE D'UNE CENTRALE NUCLÉAIRE**
VORRICHTUNG UND VERFAHREN ZUR VERWALTUNG DER ANZEIGE VON DATEN ZUR STEUERUNG EINES KERNKRAFTWERKS
DEVICE AND METHOD FOR MANAGING THE DISPLAY OF DATA FOR CONTROLLING A NUCLEAR POWER PLANT

(30) Priorité: 15.12.2015 FR 1562432
(43) Date de publication de la demande: 24.10.2018
(73) Titulaire: FRAMATOME, 92400 Courbevoie (FR)
(72) Inventeur: GOMES-AUGUSTO, Silvia, 94210 La Varenne (FR); HILSENKOPF, Philippe, 77500 Chelles (FR); BAZOT, Pierre, 78620 L'etang La Ville (FR)
(74) Mandataire: Lavoix
(86) Numéro de dépôt international: PCT/EP2016/081291
(87) Numéro de publication internationale: WO 2017/103006

(56) Documents cités:
- EP-A2- 2 843 626
- JP-A- H 063 482
- US-A1- 2007 101 290
- US-A1- 2007 216 700
- US-A1- 2008 205 693
- US-A1- 2012 050 320

## Description

La présente invention concerne un dispositif électronique de gestion de l'affichage de données sur au moins un écran d'affichage, pour le pilotage d'une centrale nucléaire comportant au moins un réacteur nucléaire.

L'invention concerne également un système de pilotage de la centrale nucléaire. Le système comprend un ensemble de capteurs et d'actionneurs associés au(x) réacteur(s) nucléaire(s), une pluralité d'unités électroniques de pilotage, chaque unité de pilotage étant configurée pour effectuer au moins une action parmi l'acquisition d'une valeur mesurée par un capteur correspondant et la commande d'un actionneur correspondant ; et un tel dispositif électronique, les données étant associées aux unités de pilotage, le dispositif électronique e étant relié à la pluralité d'unités de pilotage. Les unités de pilotage et le ou les capteur(s) et/ou actionneur(s) sont conformes à plusieurs classes de sûreté nucléaire distinctes.

L'invention concerne également un procédé de gestion de l'affichage de données, mis en œuvre par un tel dispositif électronique.

L'invention concerne également un produit programme d'ordinateur comportant des instructions logicielles qui, lorsque mises en œuvre par un ordinateur, mettent en œuvre un tel procédé de gestion de l'affichage.

Le document US 8,259,990 B2 décrit un système de pilotage d'une centrale nucléaire, comportant des équipements sécuritaires et des équipements non-sécuritaires. Chaque équipement sécuritaire est un équipement capable d'effectuer une fonction permettant d'arrêter immédiatement un réacteur nucléaire, et chaque équipement non-sécuritaire est un équipement permettant de réaliser des démarrage/arrêt normaux, de surveiller et/ou de commander des opérations
Le document JPH063482A décrit un système de pilotage d'une centrale nucléaire, dans lequel les informations correspondant l'état des équipements sont agrégées dans des calques correspondant à des niveaux de sûreté séparés et dans lequel lesdits calques sont affichés sur un dispositif d'affichage. Les informations d'une certaine classe de sûreté ne se retrouvent donc pas mélangées à des informations d'une autre classe de sûreté. Le document US2007101290 décrit un dispositif d'affichage qui effectue un affichage par superpositions d'une pluralité de calques dans lequel la superposition est effectuée en fonction d'un niveau de priorité associé au contenu affiché dans chaque calque.

Le système de pilotage comprend un dispositif de gestion de l'affichage des données associées aux équipements sécuritaires et non-sécuritaires, les données associées aux différents équipements étant, lors de l'affichage, superposées les unes aux autres pour obtenir les pages affichées.

Toutefois, avec un tel système de pilotage, la gestion de l'affichage des données associées aux équipements sécuritaires n'est pas optimale.

Le but de l'invention est donc de proposer un système de pilotage et un procédé de gestion de l'affichage de données permettant d'améliorer la gestion de la sûreté des données pour le pilotage d'une centrale nucléaire.

A cet effet, l'invention a pour objet un système de pilotage d'une centrale nucléaire, selon la revendication 1.

Ainsi, le ou les modules de création de calque(s) sont configurés pour créer plusieurs calques distincts, chaque calque contenant des informations à afficher pour une classe de sûreté respective, lesdites informations étant associées à une ou plusieurs unités de pilotage conformes à ladite classe de sûreté.

Le fait de séparer les informations à afficher via des calques distincts d'une classe de sûreté à l'autre permet alors une meilleure gestion de la sûreté de données pour le pilotage de la centrale nucléaire, en évitant un mélange d'informations entre classes de sûreté différentes.

Suivant d'autres aspects avantageux de l'invention, le système comprend une ou plusieurs des caractéristiques des revendications 2 à 3, prises isolément ou suivant toutes les combinaisons techniquement possibles.

Le fait de séparer en outre la création des calques de classe de sûreté différente via une indépendance des modules de création associés permet de mieux gérer la fabrication des pages écrans contenant des informations issues d'unités électroniques de pilotage de classes de sûreté différentes, et ainsi de garantir l'affichage des informations de la classe de sûreté la plus élevée.

Lorsque le dispositif de gestion comprend plusieurs modules de création distincts, chacun est configuré pour créer un calque distinct.

L'invention a également pour objet un procédé de gestion de l'affichage de données sur au moins un écran d'affichage pour le pilotage d'une centrale nucléaire selon la revendication 4.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une représentation schématique d'un système, selon l'invention, de pilotage d'une centrale nucléaire, le système comprenant un ensemble de capteurs et d'actionneurs, une pluralité d'unités électroniques de pilotage des capteurs et/ou actionneurs, et un dispositif électronique de gestion de l'affichage de données sur plusieurs écrans d'affichage,
- la figure 2 est une représentation schématique du système de pilotage selon une variante de réalisation,
- la figure 3 est un organigramme d'un procédé, selon l'invention, de gestion de l'affichage de données pour le pilotage de la centrale nucléaire ; et
- la figure 4 est un schéma illustrant la superposition de plusieurs calques distincts pour obtenir une page de données à afficher.

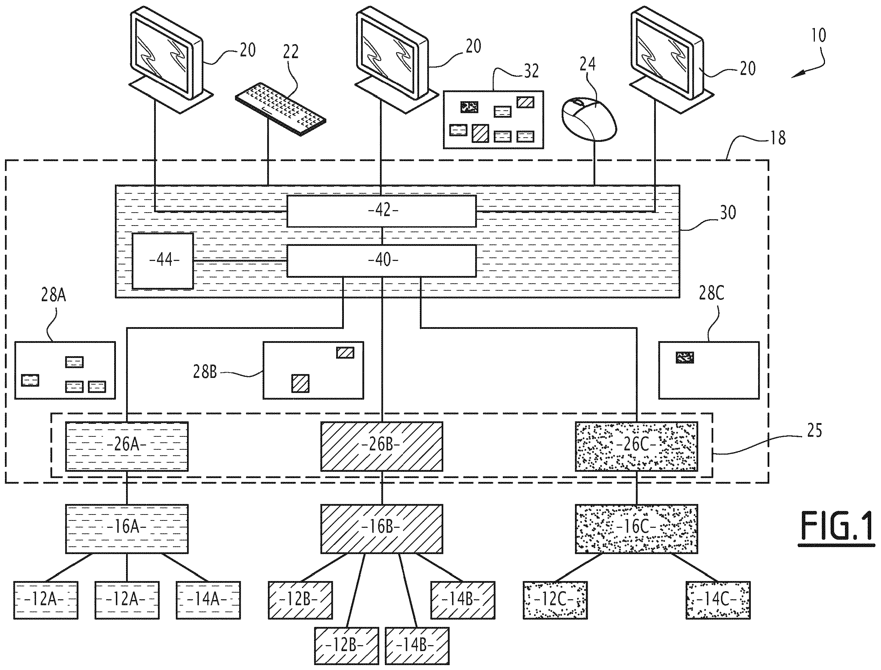

Sur la figure 1 est représenté un système 10 de pilotage d'une centrale nucléaire comportant au moins un réacteur nucléaire, non représenté.

Le système de pilotage 10 comprend un ensemble de capteurs 12A, 12B, 12C et d'actionneurs 14A, 14B, 14C associés au(x) réacteur(s) nucléaire(s).

Le système de pilotage 10 comprend une pluralité d'unités électroniques de pilotage 16A, 16B, 16C, chaque unité de pilotage 16A, 16B, 16C étant configurée pour effectuer au moins une action parmi l'acquisition d'une valeur mesurée par un capteur 12A, 12B, 12C correspondant et la commande d'un actionneur 14A, 14B, 14C correspondant.

Le système de pilotage 10 comprend un dispositif électronique 18 de gestion de l'affichage de données sur au moins un écran d'affichage 20, les données étant associées aux unités de pilotage, le dispositif électronique 18 étant relié à la pluralité d'unités de pilotage 16A, 16B, 16C.

Par « données associées aux unités de pilotage », on entend des données issues des unités de pilotage 16A, 16B, 16C et/ou des données émises à destination des unités de pilotage 16A, 16B, 16C.

Ces données sont par exemple des mesures effectuées par les capteurs 12A, 12B, 12C, et sont alors issues des unités de pilotage 16A, 16B, 16C ; et/ou encore des ordres de commande à destination des actionneurs 14A, 14B, 14C, ces données étant alors d'abord transmises aux unités de pilotage 16A, 16B, 16C.

Le système de pilotage 10 comprend, en complément facultatif, plusieurs modules d'interfaces avec l'utilisateur, tels qu'un ou plusieurs écrans d'affichage 20, un clavier 22 et d'un dispositif de pointage (souris, boule roulante, écran tactile,...) 24, visibles sur la figure 1. Dans l'exemple de la figure 1, le système de pilotage 10 comprend trois écrans d'affichage 20, et les écrans d'affichage 20, le clavier 22 et le dispositif de pointage 24 sont connectés directement au dispositif de gestion 18.

Le ou les capteur(s) 12A, 12B, 12C et/ou actionneur(s) 14A, 14B, 14C et les unités de pilotage 16A, 16B, 16C sont conformes à plusieurs classes de sûreté nucléaire distinctes, chacun étant conforme à une classe de sûreté nucléaire respective. À titre illustratif, à chaque classe de sûreté est associée une lettre suffixe respective 'A', 'B', 'C' pour les références relatives aux capteur(s) 12A, 12B, 12C, aux actionneur(s) 14A, 14B, 14C et aux unités de pilotage 16A, 16B, 16C.

Dans l'exemple de la figure 1, le ou les capteur(s) 12A, 12B, 12C et/ou actionneur(s) 14A, 14B, 14C et les unités de pilotage 16A, 16B, 16C sont conformes à trois classes de sûreté distinctes, la lettre suffixe 'A' correspondant par convention à la classe de sûreté la plus élevée, la lettre suffixe 'C' correspondant à la classe de sûreté la plus faible, et la lettre suffixe 'B' correspondant à la classe de sûreté intermédiaire.

A chaque classe de sûreté est associé un degré de sûreté, et par définition la classe de sûreté la plus élevée est celle ayant le degré de sûreté le plus élevé. Par analogie, la classe de sûreté la plus faible est celle ayant le degré de sûreté le plus faible.

Chaque classe de sûreté nucléaire est, par exemple, une classe de sûreté selon une norme choisie parmi le groupe consistant en : la norme IEC 61513, la norme IEC 61226, la norme IAEA, la norme de sûreté nucléaire des Etats-Unis d'Amérique, la norme de sûreté nucléaire européenne, la norme de sûreté nucléaire française N4, la norme de sûreté nucléaire japonaise, la norme de sûreté nucléaire coréenne, la norme de sûreté nucléaire russe, la norme de sûreté nucléaire suisse et la norme de sûreté nucléaire britannique.

À titre d'exemple, une table de correspondance entre ces normes de sûreté nucléaire est indiquée dans le tableau 1 ci-après.

**Tableau 1**

| **Norme** | **Classes de sûreté nucléaire** | | | |
|---|---|---|---|---|
| USA | Classe 1 E, sécuritaire, ou relatif à la sécurité | | Systèmes dont une panne peut inhiber des fonctions de sécurité | Non-sécuritaire |
| | RISC-1, RISC-3 | | | RISC-2, RISC-4 |
| IAEA | Sécurité | Relatif à la sécurité | | Non-important pour la sécurité |
| IEC 61226 | Catégorie A | Catégorie B | Catégorie C | Non-classifié |
| IEC 61513 | Classe 1 | Classe 2 | Classe 3 | Non-classifié |
| Europe | F1A | F1B | F2 | Non-classifié |
| France N4 | 1E | 2E | IFC/NC | |
| Japon | PS1/MS1 | PS2/MS2 | PS3/MS3 | Non-sécuritaire |
| Corée du Sud | IC-1 | IC-2 | IC-3 | Non-IC |
| Russie | Classe 2 | Classe 3 | | Classe 4 |
| Suisse | Catégorie A | Catégorie B | Catégorie C | Non-important pour la sécurité |
| Royaume-Uni | Catégorie 1 Catégorie 2 | | | Non-classifié |

Chaque classe de sûreté nucléaire est de préférence une classe de sûreté selon la norme IEC 61513. La classe de sûreté la plus élevée est alors la classe 1, et la classe de sûreté la plus faible est la classe N, où N représente le nombre de classes impliquées. Autrement dit, selon la norme IEC 61513, la classe 1 est celle ayant le degré de sûreté le plus élevé, et la classe N est celle ayant le degré de sûreté le plus faible.

Le ou les capteur(s) 12A, 12B, 12C et/ou actionneur(s) 14A, 14B, 14C et les unités de pilotage 16A, 16B, 16C sont connus en soi, pour le pilotage de la centrale nucléaire. Le ou les capteur(s) 12A, 12B, 12C sont par exemple des capteurs de mesure d'une température, d'une pression, d'un débit, d'une quantité de liquide dans un réservoir, d'une position. Le ou les actionneur(s) 14A, 14B, 14C sont, par exemple, des pompes, des vannes, des disjoncteurs électriques.

Le dispositif de gestion 18 est configuré pour gérer l'affichage de données associées aux unités de pilotage 16A, 16B, 16C.

En complément facultatif, le dispositif de gestion 18 est en outre configuré pour gérer des commandes ou actions issues d'un ou plusieurs opérateurs, ces commandes ou actions correspondant à des saisies effectuées par le ou les opérateurs à l'aide des modules d'interface, tels que le clavier 22 et le dispositif de pointage 24. Ces commandes ou actions sont par exemple destinées aux unités de pilotage 16A, 16B, 16C pour commander les actionneurs 14A, 14B, 14C. En variante ou en complément, ces actions sont destinées à la navigation entre pages d'affichage de données ou encore à la saisie de requêtes.

Le dispositif de gestion 18 comprend un ensemble 25 de module(s) électronique(s) 26A, 26B, 26C de création de calque(s) 28A, 28B, 28C, l'ensemble 25 étant configuré pour créer plusieurs calques distincts 28A, 28B, 28C, chaque calque 28A, 28B, 28C contenant des informations à afficher pour une classe de sûreté respective, associée à une ou plusieurs unités de pilotage 16A, 16B, 16C.

Le dispositif de gestion 18 comprend de préférence au moins un module de création de calque(s) 26A, 26B, 26C pour chaque classe de sûreté respective. Les modules de création de couche(s) 26A, 26B, 26C sont, par exemple, séparés d'une classe de sûreté à l'autre. Le cas échéant, à chaque classe de sûreté est associée une lettre suffixe respective 'A', 'B', 'C' pour les références 26A, 26B, 26C relatives aux modules de création de calque, avec la convention décrite précédemment, à savoir que la lettre 'A' correspond à la classe la plus sûre, la lettre 'C' correspondant à la classe la moins sûre et la lettre 'B' correspondant à la classe de sûreté intermédiaire.

Le dispositif de gestion 18 comprend un module électronique de génération 30 configuré pour générer au moins une page 32 de données à afficher, chaque page 32 étant obtenue par superposition de plusieurs calques distincts 28A, 28B, 28C.

Le dispositif de gestion 18 comprend de préférence un unique module de génération 30. Le module de génération 30 est alors de préférence conforme à la classe de sûreté la plus élevée parmi les différentes classes de sûreté.

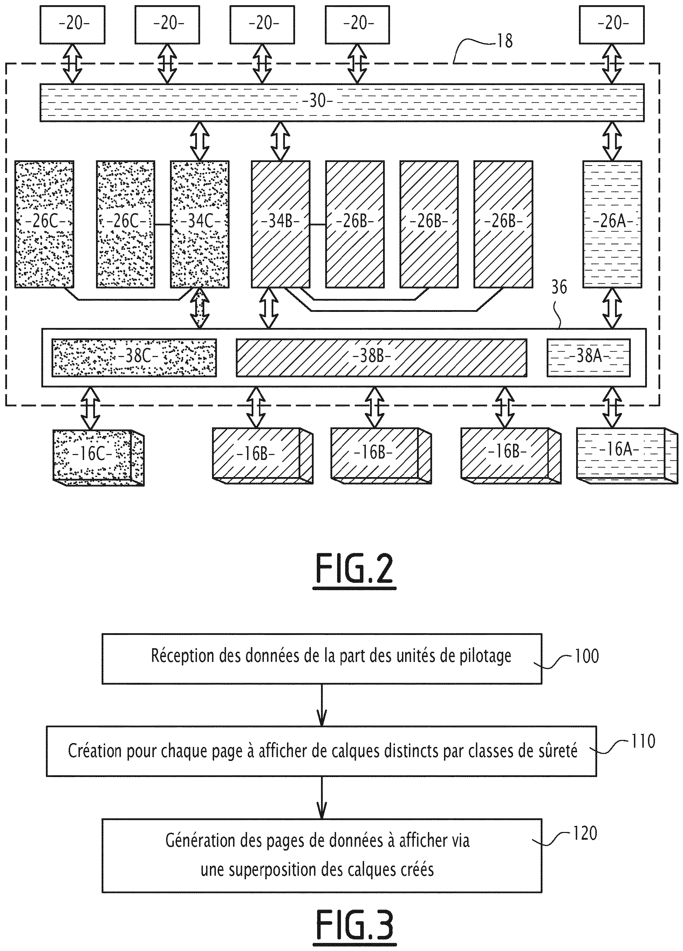

En complément facultatif, le dispositif de gestion 18 comprend un ou plusieurs répartiteurs 34B, 34C, chacun étant relié à plusieurs modules de création de calque(s) 26A, 26B, 26C et associé à une classe de sûreté respective, comme représenté sur la figure 2.

En complément facultatif encore, le dispositif de gestion 18 comprend un concentrateur de données 36 connecté entre, d'une part, les unités de pilotage 16A, 16B, 16C, et d'autre part, les modules de création de calque(s) 26A, 26B, 26C, en particulier les répartiteurs 34B, 34C le cas échéant. Le concentrateur de données 36 comporte une ou plusieurs unités de concentration de données 38A, 38B, 38C, chaque unité de concentration de données 38A, 38B, 38C étant connectée à une ou plusieurs unités de pilotage 16A, 16B, 16C et associée à une classe de sûreté respective.

Selon ce complément facultatif et dans l'exemple de la figure 2, le concentrateur de données 36 comporte trois unités de concentration de données 38A, 38B, 38C, l'unité de concentration de données 38A, associée à la classe 1 selon la norme IEC 61513, étant connecté à une unité de pilotage 16A et le module de création des calques 26A, l'unité de concentration de données 38B, associée à la classe 2 selon la norme IEC 61513, étant connectée entre trois unités de pilotage 16B et le répartiteur 34B, et l'unité de concentration de données 38C, associée à la classe 3 selon la norme IEC 61513, étant connectée entre une seule unité de pilotage 16C et le répartiteur 34C.

Le dispositif de gestion 18 comprend, par exemple, une ou plusieurs unité(s) de traitement d'informations formée(s) chacune(s) d'un processeur et d'une mémoire associée au processeur, non représentés. Le ou les modules de création de calque(s) 26A, 26B, 26C et le module de génération 30 sont alors par exemple réalisés sous forme de logiciels de création de calque(s), et respectivement d'un logiciel de génération, ces logiciels étant aptes à être stockés dans la mémoire et à être exécutés par le processeur correspondant. En complément facultatif, les répartiteurs 34B, 34C sont également réalisés sous forme de logiciels de répartition aptes à être stockés dans la mémoire et à être exécutés par le processeur.

En variante, le ou les modules de création de calque(s) 26A, 26B, 26C et le module de génération 30 sont réalisés sous forme de composants logiques programmables, tels que des FPGA (de l'anglais *Field-Programmable Gate Array),* ou encore sous forme de circuits intégrés dédiés, tels que des ASIC (de l'anglais *Application-Specific Integrated Circuit).*

Chaque calque 28A, 28B, 28C (de l'anglais *layer)* est également appelé couche, et contient des informations spécifiques à une classe de sûreté donnée. Les calques créés 28A, 28B, 28C sont séparés d'une classe de sûreté à l'autre. Les calques 28A, 28B, 28C sont définis au format de fichiers informatiques contenant des objets graphiques. Les calques 28A, 28B, 28C permettent de représenter un état dynamique de la centrale nucléaire et de piloter la centrale via des actions d'opérateur.

Le module de génération 30 est de préférence configuré pour générer chaque page 32 en privilégiant les informations de la classe de sûreté la plus élevée en cas de conflit lors de la superposition des calques.

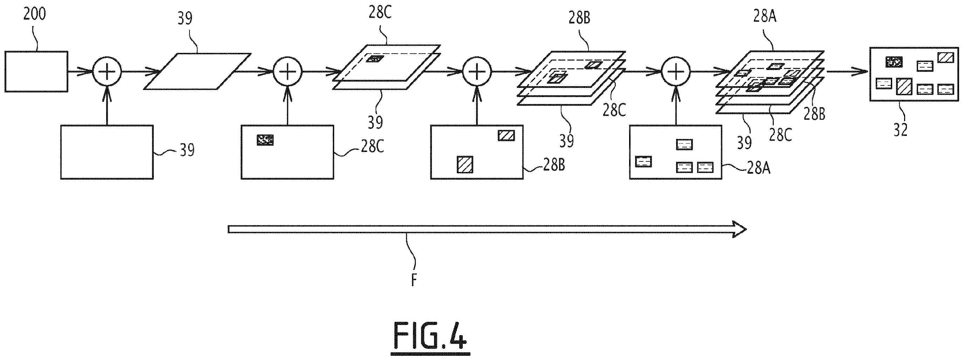

Le module de génération 30 est alors configuré pour superposer un calque 28A, 28B associé à une classe de sûreté plus élevée par-dessus un calque 28B, 28C associé à une classe de sûreté plus faible. Dans l'exemple de la figure 4, le calque 28C est ainsi superposé à un fond de plan 39, le calque 28B est ensuite superposé au résultat obtenu par superposition du fond de plan 39 et du calque 28C, et le calque 28A est enfin superposé au résultat obtenu par superposition du fond de plan 39 et des calques 28C, 28B.

Dans l'exemple de la figure 1, le module de génération 30 comporte une unité 40 de réalisation de chaque page 32 à partir du ou des calques 28A, 28B, 28C fournis par l'ensemble 25 de module(s) électronique(s) 26A, 26B, 26C, une unité 42 de gestion des écrans d'affichage 20, une unité, non représentée, de gestion des entrées faites par un opérateur via le clavier 22 et le dispositif de pointage 24. et une bibliothèque 44 d'éléments statiques représentant les fonds de plan 39 des images. La bibliothèque d'éléments statiques 44 inclut par exemple des symboles et/ou des icônes à afficher sur l'écran 20, en complément des informations associées aux capteur(s) 12A, 12B, 12C et/ou actionneur(s) 14A, 14B, 14C.

Chaque répartiteur 34B, 34C est, pour une classe de sûreté respective, configuré pour répartir les informations reçues entre différents modules de création de calque(s) 26A, 26B, 26C, ce qui permet alors de créer en parallèle pour différents écrans 20 plusieurs calques distincts 28A, 28B, 28C pour une classe de sûreté donnée.

Chaque unité de concentration de données 38A, 38B, 38C forme une passerelle de données entre, d'une part, la ou les unités de pilotage 16A, 16B, 16C auxquelles elle est reliée, et d'autre part, les modules de création de calque(s) 26A, 26B, 26C, en particulier les répartiteurs 34B, 34C le cas échéant, auxquels elle est reliée.

Le fonctionnement du dispositif de gestion 18 va désormais être expliqué à l'aide de la figure 3 représentant un organigramme du procédé selon l'invention de gestion de l'affichage de données pour le pilotage de la centrale nucléaire.

Lors d'une étape initiale 100, le dispositif de gestion 18, en particulier l'ensemble 25 de module(s) de création de calque(s) 26A, 26B, 26C, voire le cas échéant les répartiteurs 34B, 34C, reçoit des données destinées à être affichées sur le ou les écrans d'affichage 20 de la part des unités de pilotage 16A, 16B, 16C, ces données étant elles-mêmes associées aux capteur(s) 12A, 12B, 12C et/ou actionneur(s) 14A, 14B, 14C.

Lors de l'étape suivante 110, l'ensemble 25 de module(s) de création de calque(s) 26A, 26B, 26C créé pour chacune des pages à afficher sur les écrans 20, plusieurs calques distincts 28A, 28B, 28C, chaque calque 28A, 28B, 28C contenant des informations à afficher pour une classe de sûreté respective, ces informations ayant été reçues de la ou des unités de pilotage 16A, 16B, 16C conformes à ladite classe de sûreté.

Lors de la création 110 des calques 28A, 28B, 28C, les calques créés 28A, 28B, 28C sont de préférence séparés d'une classe de sûreté à l'autre.

De préférence, le dispositif de gestion 18 comprend au moins un module de création de calque(s) 26A, 26B, 26C pour chaque classe de sûreté respective, les modules de création de calque(s) 26A, 26B, 26C étant séparés d'une classe de sûreté à l'autre.

Ceci permet alors une séparation des informations de classes de sûreté différente destinées à être affichées. Les données issues d'un capteur 12A, 12B, 12C ou actionneur 14A, 14B, 14C conforme à une classe de sûreté donnée sont d'abord transmises à une unité de pilotage 16A, 16B, 16C conforme à ladite classe donnée, puis au module de création de calque(s) 26A, 26B, 26C conforme à ladite classe donnée. Autrement dit, l'architecture du système de pilotage 10 selon l'invention garantit dans ce cas que les données transitent depuis le capteur 12A, 12B, 12C ou l'actionneur 14A, 14B, 14C jusqu'au module de création de calque(s) 26A, 26B, 26C à travers des éléments qui sont tous conformes à la même classe de sûreté donnée, ce qui permet alors d'améliorer la gestion de la sûreté des données.

Le fait que le module de génération 30 soit conforme à la classe de sûreté la plus élevée parmi les différentes classes de sûreté permet alors d'assurer un traitement sûr des données même si le module de génération 30 est unique et connecté à l'ensemble 25 de module(s) de création de calque(s) 26A, 26B, 26C. En effet, le module de génération 30 conforme avec la classe de sûreté la plus élevée est compatible et apte à communiquer avec un module de création de calque(s) 26B, 26C conforme à une classe de sûreté ayant un degré de sûreté plus faible, tout en garantissant que ce degré de sûreté plus faible sera néanmoins respecté.

Lors de l'étape suivante 120, le module de génération 30 génère au moins une page 32 de données à afficher, chaque page 32 étant obtenue par superposition de plusieurs calques distincts 28A, 28B, 28C.

Lors de la génération 120 de page(s) 32, un calque 28A, 28B associé à une classe de sûreté plus élevée est de préférence superposé par-dessus un calque 28B, 28C associé à une classe de sûreté plus faible, comme représenté sur la figure 4.

Ceci permet alors de privilégier les informations de la classe de sûreté la plus élevée, par rapport à celles d'une classe de sûreté plus faible, en cas de recouvrement lors de la superposition des calques.

Sur la figure 4, le module de génération 30 commence par générer une page vierge 200 à laquelle est tout d'abord superposé le fond de plan 39, également appelé fond de page, le fond de plan 39 étant par exemple issu de la bibliothèque 44 et stocké dans la mémoire, non représentée, du dispositif de gestion 18.

Le module de génération 30 ajoute ensuite le calque 28C correspondant à la classe de sûreté la plus faible, par superposition au-dessus du fond de plan 39, puis il ajoute le calque 28B correspondant à la classe de sûreté intermédiaire par superposition au-dessus du calque 28C précédemment ajoutée.

Enfin, le module de génération 30 ajoute le calque 28A correspondant à la classe de sûreté la plus élevée par superposition au-dessus du calque 28B précédemment ajoutée, pour obtenir au final la page 32 à afficher sur le ou les écrans d'affichage 20 correspondants.

Autrement dit, les calques distincts 28A, 28B, 28C sont pris en compte par ordre croissant du degré de sûreté de la classe de sûreté à laquelle ils sont associés, cet ordre croissant étant représenté par la flèche F visible à la figure 4. Chaque calque 28A, 28B, 28C est alors superposé par-dessus le ou les calques 28B, 28C, ou par-dessus le fond 39, déjà pris en compte.

L'homme du métier comprendra que les informations visibles et affichées au final sur la page 32 générée par le module de génération 30 sont les informations contenues dans le calque 28A correspondant à la classe de sûreté la plus sûre, ainsi que celles contenues dans un calque 28B, 28C correspondant à une classe de sûreté plus faible et qui ne sont pas recouvertes par une information d'un calque 28A, 28B correspondant à une classe de sûreté plus élevée.

On conçoit alors que le dispositif électronique 18 et le procédé de gestion de l'affichage de données améliorent la gestion de la sûreté des données pour le pilotage de la centrale nucléaire, en permettant de séparer les informations à afficher par calques 28A, 28B, 28C élaborés distinctement d'une classe de sûreté à l'autre.

## Revendications

1. Système (10) de pilotage d'une centrale nucléaire comportant au moins un réacteur nucléaire, le système (10) comprenant :
- un ensemble de capteurs (12A, 12B, 12C) et d'actionneurs (14A, 14B, 14C) associés au(x) réacteur(s) nucléaire(s) ;
- une pluralité d'unités électroniques de pilotage (16A, 16B, 16C), chaque unité de pilotage (16A, 16B, 16C) étant configurée pour effectuer au moins une action parmi l'acquisition d'une valeur mesurée par un capteur (12A, 12B, 12C) correspondant et la commande d'un actionneur (14A, 14B, 14C) correspondant, les unités de pilotage (16A, 16B, 16C) et les capteurs (12A, 12B, 12C) et/ou actionneurs (14A, 14B, 14C) étant conformes à trois classes de sûreté nucléaire distinctes, chaque unité de pilotage (16A, 16B, 16C), chaque capteur (12A, 12B, 12C) et/ou chaque actionneur (14A, 14B, 14C) étant conforme à une classe de sûreté respective ; et
- un dispositif électronique (18) de gestion de l'affichage de données sur au moins un écran d'affichage (20), les données étant associées à des unités de pilotage (16A, 16B, 16C), le dispositif électronique (18) étant relié à la pluralité d'unités de pilotage (16A, 16B, 16C),
le dispositif électronique (18) étant relié à la pluralité d'unités de pilotage (16A, 16B, 16C), et comprenant :
- un ensemble (25) de module(s) électronique(s) (26A, 26B, 26C) de création de calque(s) (28A, 28B, 28C), l'ensemble (25) étant configuré pour créer plusieurs calques distincts (28A, 28B, 28C), chaque calque (28A, 28B, 28C) contenant des informations à afficher pour une classe de sûreté respective, associées à une ou plusieurs unités de pilotage (16A, 16B, 16C) conformes à ladite classe de sûreté, les calques créés (28A, 28B, 28C) étant séparés d'une classe de sûreté à l'autre, le dispositif électronique (18) comprenant au moins un module de création de calque(s) (26A, 26B, 26C) pour chaque classe de sûreté respective, les modules de création de calques(s) (26A, 26B, 26C) étant séparés d'une classe de sûreté à l'autre, chaque module de création de calques(s) (26A, 26B, 26C) étant configuré pour créer un calque distinct,
les données issues d'un capteur (12A, 12B, 12C) ou actionneur (14A, 14B, 14C) conforme à une classe de sûreté donnée étant transmises à une unité de pilotage (16A, 16B, 16C) conforme à ladite classe donnée, puis au module de création de calque(s) (26A, 26B, 26C) conforme à ladite classe donnée, et
- un module électronique de génération (30), conforme à la classe de sûreté la plus élevée parmi les différentes classes de sûreté, configuré pour générer au moins une page (32) de données à afficher, chaque page (32) étant obtenue par superposition des calques distincts (28A, 28B, 28C), le module de génération (30) étant configuré pour générer chaque page en superposant un calque (28A, 28B) associé à une classe de sûreté plus élevée par-dessus un calque (28B, 28C) associé à une classe de sûreté plus faible, pour privilégier les informations de la classe de sûreté la plus élevée en cas de conflit lors de la superposition des calques (28A, 28B, 28C).

2. Système (10) selon la revendication 1, dans lequel le dispositif électronique (18) comprend un unique module de génération (30).

3. Système (10) selon l'une quelconque des revendications précédentes, dans lequel chaque classe de sûreté nucléaire est une classe de sûreté selon une norme choisie parmi le groupe consistant en : la norme IEC 61513, la norme IEC 61226, la norme IAEA, la norme de sûreté nucléaire des Etats-Unis d'Amérique, la norme de sûreté nucléaire européenne, la norme de sûreté nucléaire française N4, la norme de sûreté nucléaire japonaise, la norme de sûreté nucléaire coréenne, la norme de sûreté nucléaire russe, la norme de sûreté nucléaire suisse et la norme de sûreté nucléaire britannique.

4. Procédé de gestion de l'affichage de données sur au moins un écran d'affichage (20) pour le pilotage d'une centrale nucléaire comportant au moins un réacteur nucléaire, les données étant issues d'une pluralité d'unités électroniques de pilotage (16A, 16B, 16C), chaque unité de pilotage (16A, 16B, 16C) étant configurée pour effectuer au moins une action parmi l'acquisition d'une valeur mesurée par un capteur (12A, 12B, 12C) et la commande d'un actionneur (14A, 14B, 14C), le ou les capteur(s) (12A, 12B, 12C) et/ou actionneur(s) (14A, 14B, 14C) étant associés au(x) réacteur(s) nucléaire(s), les unités de pilotage (16A, 16B, 16C) et le ou les capteurs (12A, 12B, 12C) et/ou actionneurs (14A, 14B, 14C) étant conformes à trois classes de sûreté nucléaire distinctes, chaque unité de pilotage (16A, 16B, 16C), chaque capteur (12A, 12B, 12C) et/ou chaque actionneur (14A, 14B, 14C) étant conforme à une classe de sûreté respective,
le procédé étant mis en œuvre par un dispositif électronique (18) apte à être relié à la pluralité d'unités de pilotage (16A, 16B, 16C),
le procédé comprenant :
- la création (110) par au moins un module de création de calque(s) (26A, 26B, 26C) pour chaque classe de sûreté respective, pour chaque page à afficher sur au moins un écran d'affichage (20), de plusieurs calques distincts (28A, 28B, 28C), chaque calque (28A, 28B, 28C) contenant des informations à afficher pour une classe de sûreté respective, associées à une ou plusieurs unités de pilotage (16A, 16B, 16C) conformes à ladite classe de sûreté, les calques créés (28A, 28B, 28C) étant séparés d'une classe de sûreté à l'autre, les modules de création de calque(s) (26A, 26B, 26C) étant séparés d'une classe de sûreté à l'autre, chaque module de création de calques(s) (26A, 26B, 26C) étant configuré pour créer un calque distinct,
les données issues d'un capteur (12A, 12B, 12C) ou actionneur (14A, 14B, 14C) conforme à une classe de sûreté donnée étant transmises à une unité de pilotage (16A, 16B, 16C) conforme à ladite classe donnée, puis au module de création de calque(s) (26A, 26B, 26C) conforme à ladite classe donnée, et
- la génération (120), par un module de génération (30) conforme à la classe de sûreté la plus élevée parmi les différentes classes de sûreté, d'au moins une page de données à afficher, chaque page étant obtenue par superposition des calques distincts (28A, 28B, 28C) en superposant un calque (28A, 28B) associé à une classe de sûreté plus élevée par-dessus un calque (28B, 28C) associé à une classe de sûreté plus faible, pour privilégier les informations de la classe de sûreté la plus élevée en cas de conflit lors de la superposition des calques (28A, 28B, 28C).

## Patentansprüche

1. System (10) zum Steuern eines Kernkraftwerks, das wenigstens einen Kernreaktor aufweist, wobei das System (10) aufweist:
- eine Einrichtung aus Sensoren (12a, 12B, 12C) und aus Aktuatoren (14A, 14B, 14C), die mit dem/den Kernreaktor/en verknüpft sind,
- ein Mehrzahl von elektronischen Steuereinheiten (16A, 16B, 16C), wobei jede Steuereinheit (16A, 16B, 16C) konfiguriert ist zum Durchführen wenigstens einer Aktion aus dem Erlangen eines Werts, der von einem korrespondierenden Sensor (12A, 12B, 12C) gemessen wird, und dem Ansteuern eines korrespondierenden Aktuators (14A, 14B, 14C), wobei die Steuereinheiten (16A, 16B, 16C) und die Sensoren (12A, 12B, 12C) und/oder Aktuatoren (14A, 14B, 14C) drei unterschiedlichen Nuklearsicherheitsklassen zugeordnet sind, wobei jede Steuereinheit (16A, 16B, 16C), jeder Sensor (12A, 12B, 12C) und/oder jeder Aktuator (14A, 14B, 14C) einer jeweiligen Sicherheitsklasse zugeordnet ist, und
- eine elektronische Vorrichtung (18) zur Verwaltung der Anzeige von Daten auf wenigstens einem Anzeigebildschirm (20), wobei die Daten mit den Steuereinheiten (16A, 16B, 16C) verknüpft sind, wobei die elektronische Vorrichtung (18) mit der Mehrzahl von Steuereinheiten (16A, 16B, 16C) verbunden ist,
wobei die elektronische Steuervorrichtung (18) mit der Mehrzahl von Steuereinheiten (16A, 16B, 16C) verbunden ist und aufweist:
- eine Einrichtung (25) aus einem elektronischen Modul/elektronischen Modulen (26A, 26B, 26C) zur Erzeugung einer/von Ebene/n (28A, 28B, 28C), wobei die Einrichtung (25) konfiguriert ist zum Erzeugen mehrerer unterschiedlicher Ebenen (28A, 28B, 28C), wobei jede Ebene (28A, 28B, 28C) anzuzeigende Informationen enthält für eine jeweilige Sicherheitsklasse, die mit einer oder mehreren Steuereinheiten (16A, 16B, 16C) verknüpft sind, die der besagten Sicherheitsklasse zugeordnet sind, wobei die erzeugten Ebenen (28A, 28B, 28C) von einer Sicherheitsklasse zur anderen getrennt sind, wobei die elektronische Vorrichtung (18) wenigstens ein Modul zur Erzeugung einer/von Ebene/n (26A, 26B, 26C) für jede jeweilige Sicherheitsklasse aufweist, wobei die Module zur Erzeugung einer/von Ebene/n (26A, 26B, 26C) von einer Sicherheitsklasse zur anderen getrennt sind, wobei jedes Modul zur Erzeugung einer/von Ebene/en (26A, 26B, 26C) konfiguriert ist zum Erzeugen einer unterschiedlichen Ebene,
wobei die von einem Sensor (12A, 12B, 12C) oder Aktuator (14A, 14B, 14C) stammenden Daten, die einer gegebenen Sicherheitsklasse zugeordnet sind, übertragen werden an eine Steuereinheit (16A, 16B, 16C), die der besagten gegebenen Klasse zugeordnet ist, und dann an das Modul zur Erzeugung einer/von Ebene/en (26A, 26B, 26C), das der besagten gegebenen Klasse zugeordnet ist, und
- ein elektronisches Modul zur Erzeugung (30), das der höchsten Sicherheitsklasse unter den unterschiedlichen Sicherheitsklassen zugeordnet ist und das konfiguriert ist zum Erzeugen wenigstens einer Seite (32) von anzuzeigenden Daten, wobei jede Seite (32) erlangt wird durch Überlagerung der unterschiedlichen Ebenen (28A, 28B, 28C), wobei das Modul zur Erzeugung (30) konfiguriert ist zum Erzeugen jeder Seite durch Überlagern einer Ebene (28A, 28B), die mit einer höheren Sicherheitsklasse verknüpft ist, über eine Ebene (28B, 28C), die mit einer geringeren Sicherheitsklasse verknüpft ist, zum Bevorrechtigen der Informationen der höchsten Sicherheitsklasse im Falle eines Konflikts während des Überlagerns der Ebenen (28A, 28B, 28C).

2. System (10) gemäß Anspruch 1, wobei die elektronische Vorrichtung (18) ein einziges Modul zur Erzeugung (30) aufweist.

3. System (10) gemäß irgendeinem der vorhergehenden Ansprüche, wobei jede Nuklearsicherheitsklasse eine Sicherheitsklasse gemäß einer Norm ist, die ausgewählt ist aus der Gruppe bestehend aus: der Norm IEC 61513, der Norm IEC 61226, der Norm IAEA, der nuklearen Sicherheitsnorm der Vereinigten Staaten von Amerika, der europäischen nuklearen Sicherheitsnorm, der französischen nuklearen Sicherheitsnorm N4, der japanischen nuklearen Sicherheitsnorm, der koreanischen nuklearen Sicherheitsnorm, der russischen nuklearen Sicherheitsnorm, der schweizerischen nuklearen Sicherheitsnorm und der britischen nuklearen Sicherheitsnorm.

4. Verfahren zum Verwalten der Anzeige von Daten auf mindestens einem Anzeigebildschirm (20) für die Steuerung eines Kernkraftwerks, das wenigstens einen Kernreaktor aufweist, wobei die Daten von einer Mehrzahl von elektronischen Steuereinheiten (16A, 16B, 16C) stammen, wobei jede Steuereinheit (16A, 16B, 16C) konfiguriert ist zum Durchführen wenigstens einer Aktion aus dem Erlangen eines Werts, der von einem Sensor (12A, 12B, 12C) gemessen wird, und dem Ansteuern eines Aktuators (14A, 14B, 14C), wobei der oder die Sensor/en (12A, 12B, 12C) und/oder Aktuator/en (14A, 14B, 14C) mit dem/den Kernreaktor/en verknüpft sind, wobei die Steuereinheiten (16A, 16B, 16C) und der oder die Sensoren (12A, 12B, 12C) und/oder Aktuatoren (14A, 14B, 14C) drei unterschiedlichen Nuklearsicherheitsklassen zugeordnet ist, wobei jede Steuereinheit (16A, 16B, 16C), jeder Sensor (12A, 12B, 12C) und/oder jeder Aktuator (14A, 14B, 14C) einer jeweiligen Sicherheitsklasse zugeordnet ist,
wobei das Verfahren durchgeführt wird von einer elektronischen Vorrichtung (18), die imstande ist, mit der Mehrzahl von Steuereinheiten (16A, 16B, 16C) verbunden zu sein, wobei das Verfahren aufweist:
- das Erzeugen (110) durch wenigstens ein Modul zur Erzeugung einer/von Ebene/n (26A, 26B, 26C) für jede jeweilige Sicherheitsklasse, für jede Seite, die auf wenigstens einem Anzeigebildschirm (20) anzuzeigen ist, mehrerer unterschiedlicher Ebenen (28A, 28B, 28C), wobei jede Ebene (28A, 28B, 28C) anzuzeigende Informationen enthält für eine jeweilige Sicherheitsklasse, die mit einer oder mehreren Steuereinheiten (16A, 16B, 16C) verknüpft sind, die der besagten Sicherheitsklasse zugeordnet sind, wobei die erzeugten Ebenen (28A, 28B, 28C) von einer Sicherheitsklasse zur anderen getrennt sind, wobei die Module zur Erzeugung einer/von Ebene/n (26A, 26B, 2 6C) von einer Sicherheitsklasse zur anderen getrennt sind, wobei jedes Modul zur Erzeugung einer/von Ebene/n (26A, 26B, 26C) konfiguriert ist zum Erzeugen einer unterschiedlichen Ebene,
wobei die Daten, die von einem Sensor (12A, 12B, 12C) oder Aktuator (14A, 14B, 14) stammen und die einer gegebenen Sicherheitsklasse zugeordnet sind, übertragen werden an eine Steuereinheit (16A, 16B, 16C), die der besagten gegebenen Klasse zugeordnet ist, und dann an das Modul zur Erzeugung einer/von Ebene/n (26A, 26B, 26C), das der besagten gegebenen Klasse zugeordnet ist, und
- das Erzeugen (120), durch ein Modul zur Erzeugung (30), das der höchsten Sicherheitsklasse unter den unterschiedlichen Sicherheitsklassen zugeordnet ist, wenigstens einer Seite von anzuzeigenden Daten, wobei jede Seite erlangt wird durch Überlagerung unterschiedlicher Ebenen (28A, 28B, 28C) unter Überlagern einer Ebene (28A; 28B), die mit einer höhren Sicherheitsklasse verknüpft ist, über eine Ebene (28B, 28C), die mit einer geringeren Sicherheitsklasse verknüpft ist, zum Bevorrechtigen der Informationen der höchsten Sicherheitsklasse im Falle eines Konflikts während des Überlagerns der Ebenen (28A, 28B, 28C).

## Claims

1. A system (10) for controlling a nuclear power plant including at least one nuclear reactor, the system (10) comprising:
- a set of sensors (12A, 12B, 12C) and actuators (14A, 14B, 14C) associated with the nuclear reactor(s);
- a plurality of electronic control units (16A, 16B, 16C), each control unit (16A, 16B, 16C) being configured to perform at least one action from among acquiring a value measured by a corresponding sensor (12A, 12B, 12C) and controlling an actuator (14A, 14B, 14C), the control units (16A, 16B, 16C) and/or the sensors (12A, 12B, 12C) and/or actuators (14A, 14B, 14C) being according to several different nuclear safety classes, each control unit (16A, 16B, 16C), each sensor (12A, 12B, 12C) and/or each actuators (14A, 14B, 14C) being according to a respective nuclear safety class; and
- an electronic device (18) for managing the display of data on at least one display screen (20), the data being associated with the control units (16A, 16B, 16C),
the electronic device (18) being connected to the plurality of control units (16A, 16B, 16C) and comprising:
- a set (25) of electronic module(s) (26A, 26B, 26C) for creating overlay(s) (28A, 28B, 28C), the set (25) being configured to create several separate overlays (28A, 28B, 28C), each overlay (28A, 28B, 28C) containing information to be displayed for a respective safety class, associated with one or several control units (16A, 16B, 16C) according to said safety class, the created overlays (28A, 28B, 28C) are separated from one safety class to the next, the electronic device (18) comprises at least one module for creating overlay(s) (26A, 26B, 26C) for each respective safety class, the overlay creation modules (26A, 26B, 26C) being separated from one safety class to the next,
the data from a sensor (12A, 12B, 12C) or actuator (14A, 14B, 14C) according to a safety class being transmitted to a control unit (16A, 16B, 16C) according to said safety class, then to the electronic module (26A, 26B, 26C) according to the said safety class, and
- an electronic generating module (30) according to the highest safety class from among the different safety classes, configured to generate at least one data page (32) to be displayed, each page (32) being obtained by superimposing a plurality of separate overlays (28A, 28B, 28C), the generating module (30) is configured to generate each page by superimposing an overlay (28A, 28B) associated with a higher safety class on top of an overlay (28B, 28C) associated with a lower safety class, to favor the information from the higher safety class in case of conflict during the superposition of the overlays (28A, 28B, 28C).

2. The system (10) according to claim 1, wherein the electronic device (18) comprises a single generating module (30).

3. The system (10) according to any one of the preceding claims, wherein each nuclear safety class is a safety class according to a standard chosen from among the group consisting of: standard IEC 61513, standard IEC 61226, standard IAEA, the United States of America nuclear safety standard, the European nuclear safety standard, the French N4 nuclear safety standard, the Japanese nuclear safety standard, the Korean nuclear safety standard, the Russian nuclear safety standard, the Swiss nuclear safety standard and the British nuclear safety standard.

4. A method for managing the display of data on at least one display screen (20) to control a nuclear power plant including at least one nuclear reactor, the data coming from a plurality of electronic control units (16A, 16B, 16C), each control unit (16A, 16B, 16C) being configured to perform at least one action from among acquiring a value measured by a sensor (12A, 12B, 12C) and controlling an actuator (14A, 14B, 14C), the sensor(s) (12A, 12B, 12C) and/or actuator(s) (14A, 14B, 14C) being associated with the nuclear reactor(s), the control units (16A, 16B, 16C) and/or the sensor(s) (12A, 12B, 12C) and/or actuator(s) (14A, 14B, 14C) being according to several different nuclear safety classes, each sensor (12A, 12B, 12C) and/or each actuators (14A, 14B, 14C) being according to a respective nuclear safety class,
the method being able to be carried out by an electronic device (18) able to be connected to the plurality of control units (16A, 16B, 16C),
the method comprising:
- creating (110) by at least one electronic module (26A, 26B, 26C) for each respective safety class, for each page to be displayed on at least one display screen (20), of several separate overlays (28A, 28B, 28C), each overlay (28A, 28B, 28C) containing information to be displayed for a respective safety class, associated with one or several control units (16A, 16B, 16C) according to said safety class, the created overlays (28A, 28B, 28C) are separated from one safety class to the next, the overlay creation modules (26A, 26B, 26C) being separated from one safety class to the next, each overlay creation module (26A, 26B, 26C) being configured for creating one distinct overlay,
the data from a sensor (12A, 12B, 12C) or actuator (14A, 14B, 14C) according to a safety class being transmitted to a control unit (16A, 16B, 16C) according to said safety class, then to the electronic module (26A, 26B, 26C) according to the said safety class, and
- generating (120) by an electronic generating module (30) according to the highest safety class from among the different safety classes, at least one data page to be displayed, each page being obtained by superimposing a plurality of separate overlays (28A, 28B, 28C) by superimposing an overlay (28A, 28B) associated with a higher safety class on top of an overlay (28B, 28C) associated with a lower safety class, to favor the information from the higher safety class in case of conflict during the superposition of the overlays (28A, 28B, 28C).
